# EUROPEAN PATENT SPECIFICATION

(11) **EP 4 275 145 B1**
(45) Date of publication and mention of the grant of the patent: **11.11.2026**
(21) Application number: 21716367.4
(22) Date of filing: 31.03.2021
(51) Int. Cl.: G01S 13/86, G01S 17/00, G06T 7/13, G01S 7/41, G01S 7/48, G01S 17/86, G01S 13/89, G06F 18/25, G06T 7/73, G06V 20/10, G06V 20/56, G06V 20/64

(54) **METHOD AND SENSOR ASSEMBLY FOR TRAINING A SELF-LEARNING IMAGE PROCESSING SYSTEM**
VERFAHREN UND SENSORANORDNUNG ZUM TRAINIEREN EINES SELBSTLERNENDEN BILDVERARBEITUNGSSYSTEMS
MÉTHODE ET ENSEMBLE DE CAPTEURS POUR L'ENTRAÎNEMENT D'UN SYSTÈME DE TRAITEMENT D'IMAGES À AUTO-APPRENTISSAGE

(43) Date of publication of application: 15.11.2023
(73) Proprietor: Yinwang Intelligent Technologies Co., Ltd., Shenzhen, Guangdong 518110 (CN)
(72) Inventor: BENNEHAR, Moussab, 80992 Munich (DE); YIN, Tao, 80992 Munich (DE); TSISHKOU, Dzmitry, 80992 Munich (DE); UZER, Ferit, 80992 Munich (DE)
(74) Representative: Maiwald GmbH
(86) International application number: PCT/EP2021/058479
(87) International publication number: WO 2022/207099

(56) References cited:
- US-A1- 2020 301 013
- JIANG YU ZHENG ET AL: "QUALITATIVE ROUTE SCENE DESCRIPTION USING AUTONOMOUS LANDMARK DETECTION", PROCEEDINGS / THIRD INTERNATIONAL CONFERENCE ON COMPUTER VISION : DECEMBER 4 - 7, 1990, OSAKA, JAPAN; [PROCEEDINGS OF THE INTERNATIONAL CONFERENCE ON COMPUTER VISION], IEEE COMPUTER SOC. PRESS, LOS ALAMITOS, CALIF, vol. CONF. 3, 4 December 1990 (1990-12-04), pages 558 - 562, XP000242655, ISBN: 978-0-8186-2057-7

## Description

### TECHNICAL FIELD

The disclosure relates generally to a method of training a convolutional neural network and a method of aligning a camera image using the convolutional neural network. Moreover, the disclosure also relates to a sensor assembly and a control unit for a self-learning image processing system for safe and robust navigation.

### BACKGROUND

US2020/301013A1 describes that object detection in a scene is based on lidar data and radar data of the scene. It is described that the lidar data and the radar data are transformed to a common coordinate system. It is described that different radar point clusters are extracted from the radar data. It is described that different lidar point clusters are extracted from the lidar data and each lidar point cluster is associated with a target object. It is described that d target object's velocity is estimated based on the movement of the respective lidar point cluster between consecutive lidar images. It is described that the estimated target object's velocity is compared with velocity information of a corresponding radar point cluster to identify corresponding radar and lidar point clusters.

In robot navigation technology, cameras and other sensors are used to determine a robot's location and its orientation with respect to its surrounding real-world environment (i.e., the robot's frame of reference). Computer vision techniques and mathematical computations are performed to interpret digital images of an environment within the robot's frame of reference, generate a mathematical representation of the environment, and generate a mapping of objects in the real-world to the mathematical representation of the environment (e.g., a "map"). In computer vision, mathematical techniques are used to detect a presence of elements or objects and recognize various elements of visual scenes that are depicted in digital images. Localized portions of an image, on which specific types of computations are done to produce visual features, may be used to analyze and classify the image. Low-level and mid-level features, such as interest points and edges, edge distributions, color distributions, shapes and shape distributions, may be computed from an image and used to detect, for example, people, objects, and landmarks that are depicted in the image. The environment build by humans may include repetitive structures.

There is a difficulty in getting robust navigation as there are a difficulty in training three-dimension (3D) models. When robust navigation is performed in three dimension, 3D, the most suitable way for navigation is to have 3D understanding of the environment, so that the robot matches a previous representation of the environment with an actual representation of the environment. The robot regresses a location as a function of a difference between the previous representation of the environment and the actual representation of the environment. One of the main features required for 3D understanding of the environment in the robust navigation is a three dimensional object recognition or three dimensional model recognition that intelligently splits the environment into tracktable chunks (example: 3D models).

For example, correct annotation of a 3D bounding box for a 3D object detection requires accurate measurement of extrinsic and intrinsic camera parameters, which are usually difficult or impossible to obtain. In known solutions, the cameras are calibrated to obtain the measurement of the extrinsic and intrinsic camera parameters. However, the cameras (e.g. mono-camera) may not provide absolute three dimensional information with limited scaling. Even if the environment data can be obtained, a 3D model is difficult to train because of a limited amount of training data and inaccurate measurements.

A known solution, such as polylines, performs a high number of matches to eliminate false estimations and the known solution is not stable and robust enough to obtain a good match in two dimension (2d) and to estimate a geometry of an area such as a width and a height. In another known solution, an accuracy of an alignment is limited to extraction of pathway structure and floor maps are not either available or the known solution needs manual conversion steps in order to be used. In another known solution, predefined ground truth is necessary and there is no 3D map construction. Instead, the environment is modified by installing wireless network antennas at fixed rates to localize multi-robots in the environment which is not suitable for mass-market applications. In another known solution provides more common points on the environment which is more suitable for localisation than alignment as this solution is not adapted to multi-sensor mapping. Therefore, there arises a need to address the aforementioned technical problem in existing solutions or technologies in training an image processing system to eliminate alignment and scaling issues.

### SUMMARY

It is an object of the disclosure to provide a method of training a convolutional neural network, and a control unit for a self-learning image processing system while avoiding one or more disadvantages of prior art approaches.

This object is achieved by the features of the independent claims. Further, implementation forms are apparent form of the dependent claims, the description, and the figures.

The disclosure provides a method of training a convolutional network, a method of aligning a camera image using a trained convolutional neural network and a sensor assembly, and a control unit for a self-learning image processing system.

According to a first aspect, there is a method of training a convolutional neural network. The method includes providing a sensor image obtained by a sensor and a camera image obtained by a camera. The sensor is capable of determining a distance to and dimensions of an object in the sensor image. The sensor image and the camera image are of a same environment. The environment have at least one type of repetitive structure. The method includes, for a plurality of sensor images providing different views of the environment, extracting one or more sensor image features of the sensor image using a trained convolutional neural network and projecting the one or more sensor image features to a two dimensional (2d) image plane using a rigid transformation between the sensor image and the camera image. The sensor image features are connected to one or more boundary planes of the environment. The method includes using the projected sensor image features as labels and the camera images to train the convolutional neural network to identify repetitive structures in evaluation camera images.

The method uses highly geometric features that align maps with a smaller number of matching. The highly geometric features enable to train the convolutional neural network accurately. The extracted features of the sensor image and the camera image include more information than pathways such as a height, a width, a length of principal edges of objects of the environment that provides more orientation information. The method is suitable for mass-market applications. The method aligns and scales the maps using the repetitive and symmetric structures. The method constructs the alignment of the maps independently, without any synchronization step. The features are extracted from the sensor image and the camera image (for example, 3D images) are transferred to 2D images as an auto labelling process for training the convolutional neural network. The method uses repetitive structures in the environment build by humans as an initial hypothesis to eliminate alignment and scaling issues in robust navigation.

In a first possible implementation form, the method includes determining a scaling to bring one or both of the sensor image and the camera image to the same scale.

In a second possible implementation form, the step of extracting the one or more features in the sensor image includes identifying at least one corner in the feature the corner being the intersection of two intersecting edges of the feature, and determining the height of the feature and the normalized lengths of the intersecting edges.

Optionally, the one or more features in the first image such as the at least one corner in the feature, the height of the feature and the normalized lengths of the intersection edges are used as labels to train the convolutional neural network.In a third possible implementation form, the first sensor is a lidar or a RADAR.

According to a second aspect, there is provided a method of aligning a camera image comprising one or more repetitive structures, using a convolutional neural network that has been trained by the above method. The method is performed by the convolutional neural network and includes the steps, of receiving the camera image. The method includes extracting the one or more features of the camera image. The method includes clustering the features in the camera image and creating a camera image histogram corresponding to the clustered features in the camera image. The method includes aligning the map based on the camera image histogram using the alignment determined during the training procedure.

The method optimizes a computational complexity by splitting the matching by a histogram matching and a 3D feature matching. The histogram matching may perform faster, and the 3D feature may provide accurate results. The histogram matching and the 3D feature matching improve each sensor map separately for relocalization and to find edge cases. The method extracts common features in different sensors by transferring the common features between the sensors. A neural network that is previously trained with similar camera images in other scenarios may used for extracting the one or more features. The trained neural network may be used for extracting one or more features from the camera image.

Optionally, the convolutional neural network has been trained by determining a scaling to bring one or both of the sensor image and the camera image to the same scale. The method includes the step of scaling the camera image.

Optionally, the method includes the steps of receiving a sensor image of the environment. The sensor image is obtained by a first sensor capable of determining a distance to and dimensions of an object. The method further includes the step of extracting one or more features of the sensor image. The features are connected to one or more of the boundary planes of the environment. The method further includes the step of clustering the features in the sensor image and creating a sensor image histogram corresponding to the features in the sensor image. The step of aligning the map includes comparing the sensor image histogram and the camera image histogram and using the result of the comparison in the alignment step.

According to a third aspect, there is provided a computer program product comprising computer-readable code means which when executed in a control unit of a convolutional neural network will cause the convolutional neural network to perform the above methods.

According to a fourth aspect, there is provided a control unit for a self-learning image processing system. The control unit is configured to receive a sensor image from a first sensor. The first sensor is capable of determining a distance to and dimensions of an object in the first image and a camera image from a camera. The sensor image and the camera image are of a same environment. The environment have at least one type of repetitive structure. The control unit is arranged to control the self-learning image processing system. The self-learning image processing system extracts one or more features of the sensor image. The features are connected to one or more of the boundary planes of the environment. The self-learning image processing system extracts the same one or more features of the camera image using a convolutional neural network that has been trained according to any one of the first aspect, the first possible implementation form, the second possible implementation form, the third possible implementation form. The self-learning image processing system clusters the features in the first image and creates a first histogram corresponding to the features in the first image. The self-learning image processing system clusters the features in the second image and creates a second histogram corresponding to the features in the second image. The self-learning image processing system matches the first and second histograms and uses the result of the matching to match the features of the first and the second image. The self-learning image processing system aligns the map based on the result of the feature matching.

The control unit aligns maps with a smaller number of matching using highly geometric features available in the sensor image and the computer image. The geometric features available in the sensor image and the camera image include more information than pathways such as a height, a width, a length of principal edges of objects of the environment that provides more orientation information. The control unit is suitable for mass-market applications. The control unit aligns and scales the maps using the repetitive and symmetric structures. The control unit constructs the alignment of the maps independently without any synchronization step. The features are extracted from the sensor image and the camera image (for example, 3D images) are transferred to 2D images as an auto labelling process for training the convolutional neural network.

Optionally, the control unit is arranged to perform the step of extracting the one or more features in the first image by identifying at least one corner in the feature and determining the height of the feature and the normalized lengths of the intersecting edges. The corner is the intersection of two intersecting edges of the feature.

Optionally, the control unit is arranged to perform the step of extracting one or more features of the first image by means of a convolutional neural network that has been trained by input data sets. Each input data set includes a camera image and a lidar image of the same area.

According to a fifth aspect, there is provided a sensor assembly comprising a first sensor arranged to provide a first image and a camera arranged to provide a camera image. The sensor image and the camera image are of a same environment. The environment have at least one type of repetitive structure. The first sensor is capable of determining a distance to and dimensions of an object in the first image. The sensor assembly includes control means arranged to control the sensor assembly. The control unit is a control unit as described in the fourth aspect. The first sensor may be a lidar or a RADAR.

The sensor assembly aligns maps with a smaller number of matching using highly geometric features available in the sensor image and the computer image. The geometric features available in the sensor image and the camera image include more information than pathways such as a height, a width, a length of principal edges of objects of the environment that provides more orientation information. The sensor assembly is suitable for mass-market applications. The sensor assembly aligns and scales the maps using the repetitive and symmetric structures. The sensor assembly constructs the alignment of the maps independently, without any synchronization step. The histogram matching and the 3D feature matching performed using the sensor assembly improve each sensor map separately for relocalization and to find edge cases. The sensor assembly extracts common features in different sensors by transferring the common features between the sensors.

Therefore, according to the method, the computer program product, and the sensor assembly, the safe and robust navigation using the convolutional neural network improves the alignment and scaling for obtaining a common representation of the environment. The method enables that the alignment of the maps is independently constructed without any synchronisation.

These and other aspects of the disclosure will be apparent from and the implementation(s) described below.

### BRIEF DESCRIPTION OF DRAWINGS

Implementations of the disclosure will now be described, by way of example only, with reference to the accompanying drawings, in which:
FIG. 1 is a block diagram that illustrates a control unit for a self-learning image processing system in accordance with an implementation of the disclosure;
FIG. 2 is a block diagram that illustrates a sensor assembly in accordance with an implementation of the disclosure;
FIG. 3 is a process flow diagram that illustrates operations of a self-learning image processing system with a convolutional neural network in accordance with an implementation of the disclosure;
FIGS. 4A and 4B are exemplary environment diagrams that illustrate a parking zone environment and corresponding specifications of extracted features in accordance with an implementation of the disclosure;
FIG. 5 is a flow diagram that illustrates a method of training a convolutional neural network in accordance with an implementation of the disclosure; and
FIG. 6 is a flow diagram that illustrates a method of aligning a camera image including one or more repetitive structures, using a convolutional neural network in accordance with an implementation of the disclosure.

### DETAILED DESCRIPTION OF THE DRAWINGS

Implementations of the disclosure provide a method of training a convolutional neural network and a method of aligning a camera image using the convolutional neural network for safe and robust navigation. The disclosure also relates to a sensor assembly and a control unit for a self-learning image processing system for safe and robust navigation.

To make solutions of the disclosure more comprehensible for a person skilled in the art, the following implementations of the disclosure are described with reference to the accompanying drawings.

Terms such as "a first", "a second", "a third", and "a fourth" (if any) in the summary, claims, and foregoing accompanying drawings of the disclosure are used to distinguish between similar objects and are not necessarily used to describe a specific sequence or order. It should be understood that the terms so used are interchangeable under appropriate circumstances, so that the implementations of the disclosure described herein are, for example, capable of being implemented in sequences other than the sequences illustrated or described herein. Furthermore, the terms "include" and "have" and any variations thereof, are intended to cover a non-exclusive inclusion. For example, a process, a method, a system, a product, or a device that includes a series of steps or units, is not necessarily limited to expressly listed steps or units but may include other steps or units that are not expressly listed or that are inherent to such process, method, product, or device.

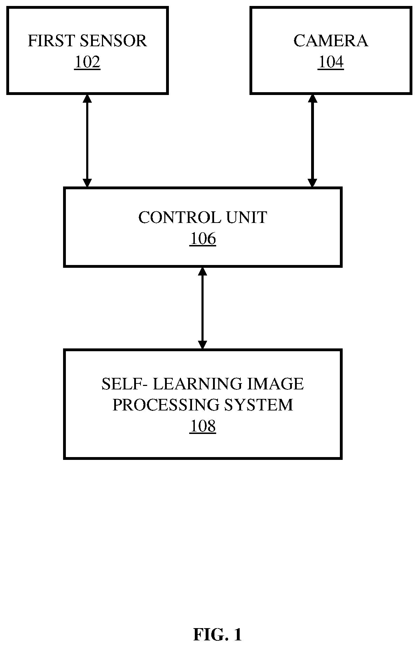

FIG. 1 is a block diagram that illustrates a control unit **106** for a self-learning image processing system **108** in accordance with an implementation of the disclosure. The block diagram includes a first sensor **102,** a camera **104,** the control unit **106,** and the self-learning image processing system **108.** The control unit **106** is configured to receive a sensor image from the first sensor **102** and a camera image from the camera **104.** The first sensor **102** is capable of determining a distance to and dimensions of an object in a first image and a camera image from the camera **104.** The sensor image and the camera image are of a same environment. The environment have at least one type of repetitive structure. The control unit **106** is arranged to control the self-learning image processing system **108.** The self-learning image processing system **108** extracts one or more features of the sensor image. The features are connected to one or more of the boundary planes of the environment. The self-learning image processing system **108** extracts the same one or more features of the camera image using a convolutional neural network that has been trained. The convolutional neural network has been trained by (i) for one or more sensor images providing different views of the environment, extracting one or more sensor image features of the sensor image, and projecting the one or more sensor image features to a 2d image plane using a rigid transformation between the sensor image and the camera image, and (ii) using the projected sensor image features as labels and the camera images to train the convolutional neural network to identify repetitive structures in evaluation camera images. The self-learning image processing system **108** clusters the features in the first image and creating a first histogram corresponding to the features in the first image. The self-learning image processing system **108** clusters the features in the second image and creates a second histogram corresponding to the features in the second image. The self-learning image processing system **108** matches the first and second histograms and uses the result of the matching to match the features of the first and the second image. The self-learning image processing system **108** aligns the map based on the result of the feature matching.

The control unit **106** aligns and scales the maps using the repetitive and symmetric structures. The control unit **106** constructs the alignment of the maps independently without any synchronization step. The features are extracted from the sensor image and the camera image (e.g. 3D images) are transferred to camera images (e.g. 2D images) as an auto labelling process for training the convolutional neural network. The control unit **106** optimizes a computational complexity by splitting the matching by a histogram matching and a 3D feature matching. The histogram matching may perform faster, and the 3D feature may provide accurate results. The histogram matching and the 3D feature matching improve each sensor map separately for relocalization and to find edge cases. The control unit **106** extracts common features in different sensors by transferring the common features between the sensors. The projected features are used as auto labels for the convolutional neural network to improve the feature extraction in the sensor image and the camera image. The control unit **106** uses repetitive structures in the environment build by humans as an initial hypothesis to eliminate alignment and scaling issues in robust navigation.

Optionally, the control unit **106** is arranged to perform the step of extracting the one or more features in the first image by identifying at least one corner in the feature and determining the height of the feature and the normalized lengths of the intersecting edges. The corner is the intersection of two intersecting edges of the feature. Optionally, the one or more features in the first image such as at least one of corner in the feature, a height of the feature and the normalized lengths of the intersection edges are used as labels to train the convolutional neural network.

Optionally, the control unit **106** is arranged to perform the step of extracting one or more features of the first image by means of a convolutional neural network that has been trained by input data sets. Each input data set includes a camera image and a lidar image of the same area.

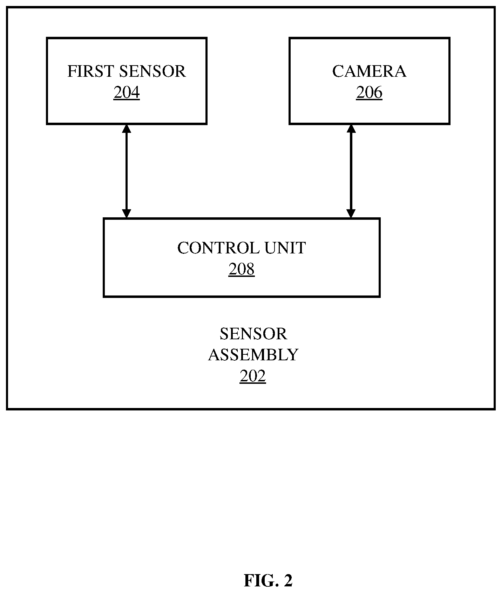

FIG. 2 is a block diagram that illustrates a sensor assembly **202** in accordance with an implementation of the disclosure. The sensor assembly **202** includes a first sensor **204,** a camera **206,** and a control unit **208.** The first sensor **204** is arranged to provide the first image and the camera **206** is arranged to provide a camera image. The sensor image and the camera image are of a same environment. The environment have at least one type of repetitive structure. The first sensor **204** is capable of determining a distance to and dimensions of an object in the first image. The sensor assembly **202** includes control means arranged to control the sensor assembly **202.** The control means is the control unit **208.** The first sensor **204** may be a lidar or a RADAR.

The control unit **208** is configured to receive the sensor image from the first sensor **204** and the camera image from the camera **206.** The control unit **208** extracts one or more features of the sensor image. The features are connected to one or more of the boundary planes of the environment. The control unit **208** extracts the same one or more features of the camera image using a neural network that has been trained. The control unit **208** clusters the features in the first image and creates a first histogram corresponding to the features in the first image. The control unit **208** clusters the features in a second image and creates a second histogram corresponding to the features in the second image. The control unit **208** matches the first and second histograms and uses the result of the matching to match the features of the first and the second image. The control unit **208** aligns the map based on the result of the feature matching.

The sensor assembly **202** aligns maps with a smaller number of matching using highly geometric features available in the sensor image and the computer image. The geometric features available in the sensor image and the camera image include more information than pathways such as a height, a width, a length of principal edges of objects of the environment that provides more orientation information. The sensor assembly **202** is suitable for mass-market applications. The sensor assembly **202** aligns and scales the maps using the repetitive and symmetric structures. The sensor assembly **202** constructs the alignment of the maps independently, without any synchronization step. The histogram matching and the 3D feature matching performed using the sensor assembly **202** improve each sensor map separately for relocalization and to find edge cases. The sensor assembly **202** extracts common features in different sensors by transferring the common features between the sensors.

Optionally, the control unit **208** is arranged to perform the step of extracting the one or more features in the first image by identifying at least one corner in the feature and determining the height of the feature and the normalized lengths of the intersecting edges. The corner is the intersection of two intersecting edges of the feature.

Optionally, the control unit **208** is arranged to perform the step of extracting one or more features of the first image by means of a convolutional neural network that has been trained by input data sets. Each input data set including a camera image and a lidar image of the same area.

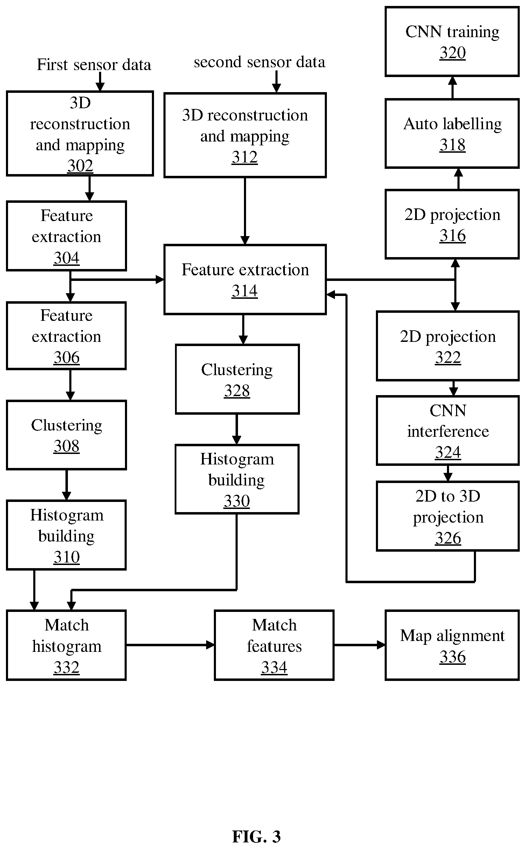

FIG. 3 is a process flow diagram that illustrates operations of a self-learning image processing system with a convolutional neural network in accordance with an implementation of the disclosure. At a step **302,** environment is mapped with first sensor data (a sensor image or a camera image) and platform by ordering them based on their 3D reconstruction capabilities. At a step **304,** one or more features of the sensor image are extracted from the first sensor data. The features are connected to one or more of the boundary planes of the environment. At a step **306,** the same one or more features of the camera image are extracted using a neural network that has been trained. At a step **308,** the features in the first image are clustered. At a step **310,** a first histogram corresponding to the features in the first image is built. At a step **312,** the environment is mapped with second sensor data (the sensor data or the camera data) and platform by ordering them based on their 3D reconstruction capabilities. At a step **314,** one or more features are extracted from the second sensor data. The one or more features associated with the second sensor data is extracted using the one or more features associated with the first sensor data and inputs provided from a trained convolutional neural network. At a step **316,** the one or more sensor image features to a 2d image plane are projected using a rigid transformation between the sensor image and the camera image. At a step **318,** the projected 2D second sensor data is auto labeled. At a step **320,** the convolutional neural network is trained with the auto labeled 2D second sensor data. At a step **322,** the one or more extracted features associated with the second sensor data is projected in 2D. At a step **324,** the convolutional neural network interference is performed using the one or more extracted features associated with the second sensor data. At a step **326,** the one or more extracted features associated with the second sensor data are projected from the 2D to the 3D and provided as training data to extract the one or more features associated with the second sensor data.

The one or more features associated with the second sensor data is connected to one or more boundary planes of the environment. At a step **328,** the one or more features associated with the second sensor image are clustered. At a step **330,** a second histogram corresponds to the features in the second image. At a step **332,** the first and second histograms are matched and using the result of the matching to match the features of the first and the second image. At a step **334,** the features associated with the first sensor data and the second sensor data are matched. At a step **336,** the map is aligned based on the results of the histogram matching and the features matching.

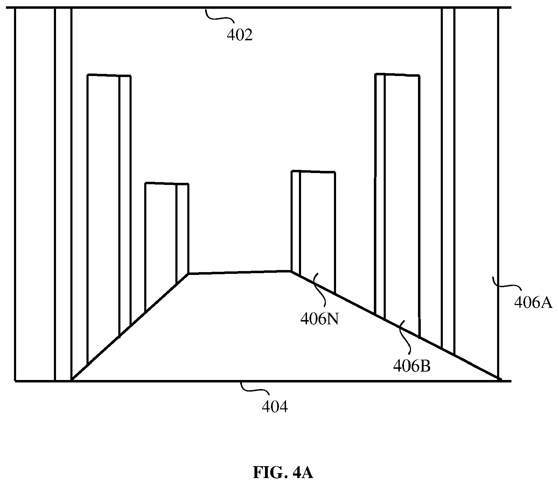

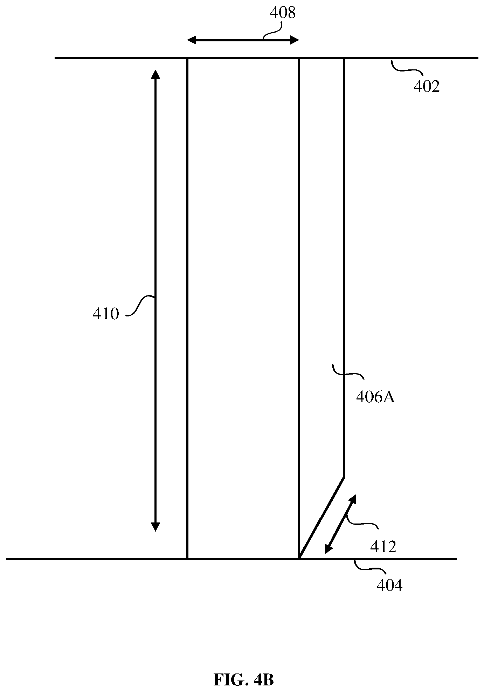

FIGS. 4A and 4B are exemplary environment diagrams that illustrate a parking zone environment and corresponding specifications of extracted features in accordance with an implementation of the disclosure. The parking zone includes a ceiling **402,** a floor **404,** and one or more pillars **406A-N.** The corresponding specifications of extracted features may include a height **410** of an object (for example, pillar **406A),** a width **408** of the object, etc, as shown in FIG. 4B. The features may be extracted from any one of a 2d image or a 3d image. A convolutional neural network is trained using the extracted features associated with well-structured and repetitive structures in the parking zone such as the one or more pillars **406A-N,** lines parking lots and their height **410,** the width **408,** and a length **412.** The features are extracted using sensor assemblies available in the parking zone. The extracted features may include corners with normalized height and lengths two principal edges of well-structured and repetitive structures. The extracted features are filtered based on the estimation of the ceiling **402** and the floor **404.** The filtered features are projected into 2D as labels for the convolutional neural network. The filtered features are clustered and a corresponding histogram is created based on the clustering. A pose estimation is performed for alignment and scaling by matching histograms and a 3D matching method. Optionally, the map is optimized using a result of the pose estimation.

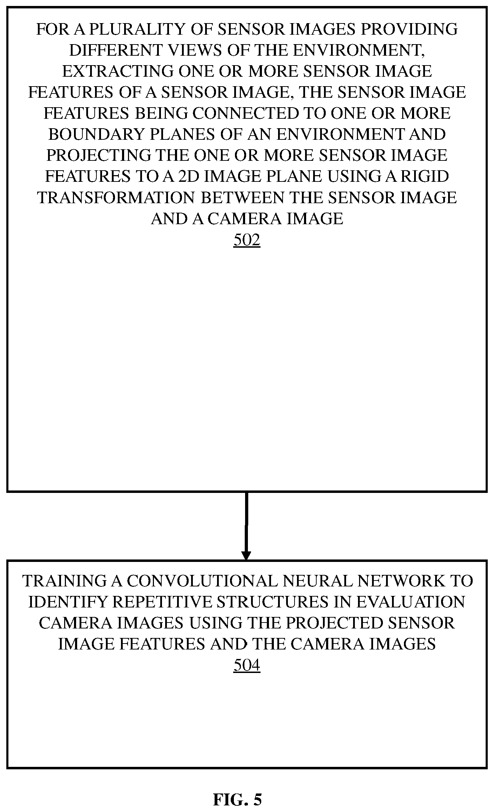

FIG. 5 is a flow diagram that illustrates a method of training a convolutional neural network in accordance with an implementation of the disclosure. The method includes providing a sensor image obtained by a sensor and providing a camera image obtained by a camera. The sensor is capable of determining a distance to and dimensions of an object in the sensor image. The sensor image and the camera image are of a same environment. The environment have at least one type of repetitive structure. At a step **502,** for a plurality of sensor images providing different views of the environment, one or more sensor image features of the sensor image are extracted using a trained convolutional neural network and the one or more sensor image features are projected to a 2d image plane using a rigid transformation between the sensor image and the camera image as labels. The sensor image features are connected to one or more boundary planes of the environment. At a step **504,** the convolutional neural network is trained to identify repetitive structures in evaluation camera images using the projected sensor image features and the camera images.

The method uses highly geometric features that align maps with a smaller number of matching. The highly geometric features enable to train the convolutional neural network accurately. The extracted features of the sensor image and the camera image include more information than pathways such as a height, a width, a length of principal edges of objects of the environment that provides more orientation information. The method is suitable for mass-market applications. The method aligns and scales the maps using the repetitive and symmetric structures. The method constructs the alignment of the maps independently, without any synchronization step. The features are extracted from the sensor image and the camera image (For example, 3D images) are transferred to 2D images as an auto labelling process for training the convolutional neural network. The method uses repetitive structures in the environment build by humans as an initial hypothesis to eliminate alignment and scaling issues in robust navigation.

Optionally, is the method includes determining a scaling to bring one or both of the sensor image and the camera image to the same scale. Optionally, the step of extracting the one or more features in the sensor image includes identifying at least one corner in the feature and determining the height of the feature and the normalized lengths of the intersecting edges. The corner is the intersection of two intersecting edges of the feature.

Optionally, the one or more features in the first image such as the at least one corner in the feature, the height of the feature and the normalized lengths of the intersection edges are used as labels to train the convolutional neural network.

Optionally, the first sensor is a lidar or a RADAR.

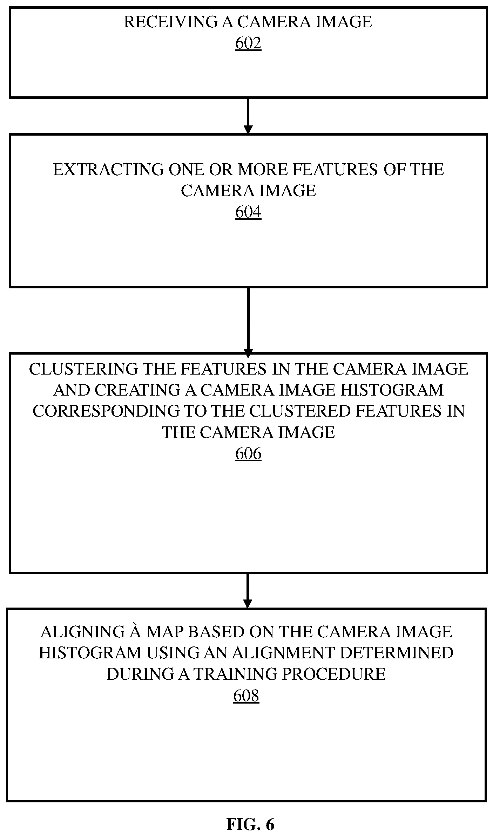

FIG. 6 is a flow diagram that illustrates a method of aligning a camera image including one or more repetitive structures, using a convolutional neural network in accordance with an implementation of the disclosure. At a step **602,** a camera image is received. At a step **604,** one or more features of the camera image are extracted. At a step **606,** the features in the camera image are clustered and a camera image histogram corresponding to the clustered features in the camera image is created. At a step **608,** a map is aligned based on the camera image histogram using the alignment determined during the training procedure.

Optionaly, a neural network that is previously trained with similar camera images in other scenarios may used for extracting the one or more features. The trained neural network may be used for extracting one or more features from the camera image.

The method optimizes a computational complexity by splitting the matching by a histogram matching and a 3D feature matching. The histogram matching may perform faster, and the 3D feature may provide accurate results. The histogram matching and the 3D feature matching improve each sensor map separately for relocalization and to find edge cases. The method extracts common features in different sensors by transferring the common features between the sensors.

Optionally, the convolutional neural network has been trained by determining a scaling to bring one or both of the sensor image and the camera image to the same scale. The method includes the step of scaling the camera image. Optionally, the steps of receiving a sensor image of the environment. The sensor image is obtained by a first sensor capable of determining the distance to and dimensions of an object. The method includes the steps of extracting one or more features of the sensor image. The features are connected to one or more of the boundary planes of the environment. The method further includes the step of clustering the features in the sensor image and creating a sensor image histogram corresponding to the features in the sensor image. The step of aligning the map includes comparing the sensor image histogram and the camera image histogram and using the result of the comparison in the alignment step. Optionally, a SLAM algorithm is used to obtain a 3D reconstruction of the environment.

A computer program product including computer-readable code means which when executed in a control unit of a convolutional neural network will cause the convolutional neural network to perform the above methods.

In addition, while at least one of these components are implemented at least partially as an electronic hardware component, and therefore constitutes a machine, the other components may be implemented in software that when included in an execution environment constitutes a machine, hardware, or a combination of software and hardware.

Although the disclosure and its advantages have been described in detail, it should be understood that various changes, substitutions, and alterations can be made herein without departing from the scope of the disclosure as defined by the appended claims

## Claims

1. A method of training a convolutional neural network, the method comprising providing a first sensor image and a second sensor image obtained by a sensor (102, 204), the sensor (102, 204) being capable of determining a distance to and dimensions of an object in the first sensor image and the second sensor image, and providing a camera image obtained by a camera (104, 206), the first sensor image and the second sensor image and the camera image being of a same environment, the environment having at least one type of repetitive structure, the method comprising:
for a plurality of sensor images providing different views of the environment:
generating (302) a first map by mapping the environment with the first sensor image;
extracting (304) one or more features of the first sensor image, wherein the features are connected to one or more boundary planes of the environment;
generating (312) a second map by mapping the environment with the second sensor image;
extracting (314) one or more features of the second sensor image, wherein the extraction of the the one or more second sensor image features comprises utilization of the extracted one or more first sensor image features;
projecting (316) the extracted one or more second sensor image features to a 2d image plane using a rigid transformation between the second sensor image and the camera image;
labelling (318) the one or more second sensor image features projected to the 2d image plane; and
training (320) the convolutional neural network with the one or more second sensor image features projected to the 2d image plane.

2. The method according to claim 1, further comprising determining a scaling to bring one or both of the sensor image and the camera image to the same scale.

3. The method according to claim 1, wherein the step of extracting the one or more features in the sensor image includes identifying at least one corner in the feature the corner being the intersection of two intersecting edges of the feature, and determining the height of the feature and the normalized lengths of the intersecting edges.

4. The method according to any one of the preceding claims, wherein the first sensor (102, 204) is a lidar or a RADAR.

5. The method according to any of claims 1-4, wherein the extraction of the the one or more second sensor image features comprises utilization of the convolutional neural network.

6. The method according to claim 5, comprising projecting (326) the one or more extracted features associated with the second sensor image from the 2D to the 3D and providing the 3D data as training data to extract the one or more features associated with the second sensor image.

7. The method according to any of claims 1-6, comprising:
extracting (306) one or more features of the camera image, wherein the one or more features of the camera image are the same as the extracted one or more features of the first sensor image;
clustering (308) the extracted one or more features of the camera image;
building (310) a first histogram corresponding to the extracted one or more features of the camera image;
clustering (328) the extracted one or more features of the second sensor image;
building (330) a second histogram corresponding to the extracted one or more features of the second sensor image;
matching (332) the first histogram and second histograms and using the result of the matching to match the features of the camera image and the second sensor image;
matching (334) the extracted one or more features of the first sensor image and the the extracted one or more features of the second sensor image; and
aligning (336) a map of objects in environment with a mathematical represnetation of the environment based on the match of the features of the camera image and the second sensor image and the match of the extracted one or more features of the first sensor image and the the extracted one or more features of the second sensor image.

8. A computer program product comprising computer-readable code means which when executed in a control unit (106, 208) of a convolutional neural network will cause the convolutional neural network to perform the method according to any one of the preceding claims.

9. A control unit (106, 208) for a self-learning image processing system (108, 306), the control unit (106, 208) being configured to receive a first sensor image and a second sensor image from a first sensor (102, 204), the first sensor (102, 204) being capable of determining distance to and dimensions of an object in a first sensor image and the second sensor image, and a camera image from a camera (104, 206), the first sensor image and the second sensor image and the camera image being of a same environment, the environment having at least one type of repetitive structure, the control unit (106, 208) being arranged to control the self-learning image processing system to perform the following steps:
for a plurality of sensor images providing different views of the environment:
generate (302) a first map by mapping the environment with the first sensor image;
extract (304) one or more features of the first sensor image, wherein the features are connected to one or more boundary planes of the environment;
generate (312) a second map by mapping the environment with the second sensor image;
extract (314) one or more features of the second sensor image, wherein the extraction of the the one or more second sensor image features comprises utilization of the extracted one or more first sensor image features;
project (316) the extracted one or more second sensor image features to a 2d image plane using a rigid transformation between the second sensor image and the camera image;
label (318) the one or more second sensor image features projected to the 2d image plane; and
train (320) the convolutional neural network with the one or more second sensor image features projected to the 2d image plane.

10. The control unit according to claim 9, wherein the step of extract the one or more features in the sensor image includes identification of at least one corner in the feature the corner being the intersection of two intersecting edges of the feature, and determining the height of the feature and the normalized lengths of the intersecting edges.

11. The control unit according to any of claims 9-10, wherein the extraction of the the one or more second sensor image features comprises utilization of the convolutional neural network.

12. The control unit according to claim 11, the control unit configured to perform the steps of: project (326) the one or more extracted features associated with the second sensor image from the 2D to the 3D and provide the 3D data as training data to extract the one or more features associated with the second sensor image.

13. The control unit according to any of claims 9-12, the control unit configured to perform the steps of:
extract (306) one or more features of the camera image, wherein the one or more features of the camera image are the same as the extracted one or more features of the first sensor image;
cluster (308) the extracted one or more features of the camera image;
build (310) a first histogram corresponding to the extracted one or more features of the camera image;
cluster (328) the extracted one or more features of the second sensor image;
build (330) a second histogram corresponding to the extracted one or more features of the second sensor image;
match (332) the first histogram and second histograms and using the result of the matching to match the features of the camera image and the second sensor image;
match (334) the extracted one or more features of the first sensor image and the the extracted one or more features of the second sensor image; and
align (336) a map of objects in environment with a mathematical represnetation of the environment based on the match of the features of the camera image and the second sensor image and the match of the extracted one or more features of the first sensor image and the the extracted one or more features of the second sensor image.

14. A sensor assembly (202) comprising a first sensor (102, 204) arranged to provide a first sensor image and a second sensor image and a camera (104, 206) arranged to provide a camera image, the first sensor image and the second sensor image and the camera image being of a same environment, the environment having at least one type of repetitive structure, the first sensor (102, 204) being capable of determining distance to and dimensions of an object in the first sensor image and the second sensor image, the sensor assembly (202) further comprising control means arranged to control the sensor assembly (202), wherein the control means is a control unit (106, 208) according to any one of the claims 9 - 13.

15. The sensor assembly (202) according to claim 14, wherein the first sensor (102, 204) is a lidar or a RADAR.

## Patentansprüche

1. Verfahren zum Trainieren eines neuronalen Faltungsnetzwerks, wobei das Verfahren umfasst: Bereitstellen eines ersten Sensorbildes und eines zweiten Sensorbildes, die durch einen Sensor (102, 204) erhalten werden, wobei der Sensor (102, 204) in der Lage ist, einen Abstand zu und die Abmessungen von einem Objekt in dem ersten Sensorbild und dem zweiten Sensorbild zu ermitteln; und Bereitstellen eines Kamerabildes, das durch eine Kamera (104, 206) erhalten wird, wobei das erste Sensorbild und das zweite Sensorbild und das Kamerabild von einer gleichen Umgebung sind, wobei die Umgebung mindestens einen Typ einer sich wiederholenden Struktur aufweist, wobei das Verfahren umfasst:
für eine Vielzahl von Sensorbildern, die unterschiedliche Ansichten der Umgebung bereitstellen:
Erzeugen (302) einer ersten Abbildung, indem die Umgebung mit dem ersten Sensorbild abgebildet wird;
Extrahieren (304) von einem oder mehreren Merkmalen aus dem ersten Sensorbild, wobei die Merkmale mit einer oder mehreren Grenzebenen der Umgebung verbunden sind;
Erzeugen (312) einer zweiten Abbildung, indem die Umgebung mit dem zweiten Sensorbild abgebildet wird;
Extrahieren (314) von einem oder mehreren Merkmalen aus dem zweiten Sensorbild, wobei das Extrahieren des einen oder der mehreren zweiten Sensorbildmerkmale eine Verwendung des einen oder der mehreren extrahierten ersten Sensorbildmerkmale umfasst;
Projizieren (316) des einen oder der mehreren extrahierten zweiten Sensorbildmerkmale auf eine 2D-Bildebene unter Verwendung einer starren Transformation zwischen dem zweiten Sensorbild und dem Kamerabild;
Kennzeichnen (318) des einen oder der mehreren zweiten Sensorbildmerkmale, die auf die 2D-Bildebene projiziert wurden; und
Trainieren (320) des neuronalen Faltungsnetzwerks mit dem einen oder den mehreren zweiten Sensorbildmerkmalen, die auf die 2D-Bildebene projiziert wurden.

2. Verfahren nach Anspruch 1, das ferner ein Ermitteln einer Skalierung umfasst, um eines oder beide des Sensorbildes und des Kamerabildes auf die gleiche Skala zu bringen.

3. Verfahren nach Anspruch 1, wobei der Schritt des Extrahierens des einen oder der mehreren Merkmale in dem Sensorbild ein Identifizieren von mindestens einer Ecke in dem Merkmal, wobei die Ecke der Schnittpunkt von zwei sich schneidenden Kanten des Merkmals ist, und ein Ermitteln der Höhe des Merkmals und der normalisierten Längen der sich schneidenden Kanten beinhaltet.

4. Verfahren nach einem der vorhergehenden Ansprüche, wobei der erste Sensor (102, 204) ein Lidar oder ein RADAR ist.

5. Verfahren nach einem der Ansprüche 1 bis 4, wobei die Extraktion des einen oder der mehreren zweiten Sensorbildmerkmale eine Verwendung des neuronalen Faltungsnetzwerks umfasst.

6. Verfahren nach Anspruch 5, das ein Projizieren (326) des einen oder der mehreren extrahierten Merkmale, die mit dem zweiten Sensorbild assoziiert sind, aus dem 2D zu dem 3D und ein Bereitstellen der 3D-Daten als Trainingsdaten umfasst, um das eine oder die mehreren Merkmale zu extrahieren, die mit dem zweiten Sensorbild assoziiert sind.

7. Verfahren nach einem der Ansprüche 1 bis 6, das ferner umfasst:
Extrahieren (306) eines oder mehrerer Merkmale des Kamerabildes, wobei das eine oder die mehreren Merkmale des Kamerabildes die gleichen sind wie das eine oder die mehreren extrahierten Merkmale des ersten Sensorbildes;
Clustern (308) des einen oder der mehreren extrahierten Merkmale des Kamerabildes;
Erstellen (310) eines ersten Histogramms, das dem einen oder den mehreren extrahierten Merkmalen des Kamerabildes entspricht;
Clustern (328) des einen oder der mehreren extrahierten Merkmale des zweiten Sensorbildes;
Erstellen (330) eines zweiten Histogramms, das dem einen oder den mehreren extrahierten Merkmalen des zweiten Sensorbildes entspricht;
Abgleichen (332) des ersten Histogramms und des zweiten Histogramms und Verwenden des Ergebnisses des Abgleichs, um die Merkmale des Kamerabildes und des zweiten Sensorbildes abzugleichen;
Abgleichen (334) des einen oder der mehreren extrahierten Merkmale des ersten Sensorbildes und des einen oder der mehreren extrahierten Merkmale des zweiten Sensorbildes; und
Ausrichten (336) einer Abbildung von Objekten in der Umgebung mit einer mathematischen Darstellung der Umgebung basierend auf dem Abgleich der Merkmale des Kamerabildes und des zweiten Sensorbildes und dem Abgleich des einen oder der mehreren extrahierten Merkmale des ersten Sensorbildes und des einen oder der mehreren extrahierten Merkmale des zweiten Sensorbildes.

8. Computerprogrammprodukt, das ein computerlesbares Codeelement umfasst, das, wenn es in einer Steuereinheit (106, 208) eines neuronalen Faltungsnetzwerks ausgeführt wird, das neuronale Faltungsnetzwerk veranlasst, das Verfahren nach einem der vorhergehenden Ansprüche durchzuführen.

9. Steuereinheit (106, 208) für ein selbstlernendes Bildverarbeitungssystem (108, 306), wobei die Steuereinheit (106, 208) konfiguriert ist zum Empfangen eines ersten Sensorbildes und eines zweiten Sensorbildes von einem ersten Sensor (102, 204), wobei der erste Sensor (102, 204) in der Lage ist, einen Abstand zu und die Abmessungen von einem Objekt in einem ersten Sensorbild und dem zweiten Sensorbild zu ermitteln, und eines Kamerabildes von einer Kamera (104, 206), wobei das erste Sensorbild und das zweite Sensorbild und das Kamerabild von einer gleichen Umgebung sind, wobei die Umgebung mindestens einen Typ einer sich wiederholenden Struktur aufweist, wobei die Steuereinheit (106, 208) geeignet ist zum Steuern des selbstlernenden Bildverarbeitungssystems, um die folgenden Schritte durchzuführen:
für eine Vielzahl von Sensorbildern, die unterschiedliche Ansichten der Umgebung bereitstellen:
Erzeugen (302) einer ersten Abbildung, indem die Umgebung mit dem ersten Sensorbild abgebildet wird;
Extrahieren (304) von einem oder mehreren Merkmalen aus dem ersten Sensorbild, wobei die Merkmale mit einer oder mehreren Grenzebenen der Umgebung verbunden sind;
Erzeugen (312) einer zweiten Abbildung, indem die Umgebung mit dem zweiten Sensorbild abgebildet wird;
Extrahieren (314) von einem oder mehreren Merkmalen aus dem zweiten Sensorbild, wobei das Extrahieren des einen oder der mehreren zweiten Sensorbildmerkmale eine Verwendung des einen oder der mehreren extrahierten ersten Sensorbildmerkmale umfasst;
Projizieren (316) des einen oder der mehreren extrahierten zweiten Sensorbildmerkmale auf eine 2D-Bildebene unter Verwendung einer starren Transformation zwischen dem zweiten Sensorbild und dem Kamerabild;
Kennzeichnen (318) des einen oder der mehreren zweiten Sensorbildmerkmale, die auf die 2D-Bildebene projiziert wurden; und
Trainieren (320) des neuronalen Faltungsnetzwerks mit dem einen oder den mehreren zweiten Sensorbildmerkmalen, die auf die 2D-Bildebene projiziert wurden.

10. Steuereinheit nach Anspruch 9, wobei der Schritt des Extrahierens des einen oder der mehreren Merkmale in dem Sensorbild ein Identifizieren von mindestens einer Ecke in dem Merkmal, wobei die Ecke der Schnittpunkt von zwei sich schneidenden Kanten des Merkmals ist, und ein Ermitteln der Höhe des Merkmals und der normalisierten Längen der sich schneidenden Kanten beinhaltet.

11. Steuereinheit nach einem der Ansprüche 9 bis 10, wobei die Extraktion des einen oder der mehreren zweiten Sensorbildmerkmale eine Verwendung des neuronalen Faltungsnetzwerks umfasst.

12. Steuereinheit nach Anspruch 11, wobei die Steuereinheit konfiguriert ist zum Durchführen der folgenden Schritte: Projizieren (326) des einen oder der mehreren extrahierten Merkmale, die mit dem zweiten Sensorbild assoziiert sind, aus dem 2D zu dem 3D; und Bereitstellen der 3D-Daten als Trainingsdaten, um das eine oder die mehreren Merkmale zu extrahieren, die mit dem zweiten Sensorbild assoziiert sind.

13. Steuereinheit nach einem der Ansprüche 9 bis 12, wobei die Steuereinheit konfiguriert ist zum Durchführen der folgenden Schritte:
Extrahieren (306) eines oder mehrerer Merkmale des Kamerabildes, wobei das eine oder die mehreren Merkmale des Kamerabildes die gleichen sind wie das eine oder die mehreren extrahierten Merkmale des ersten Sensorbildes;
Clustern (308) des einen oder der mehreren extrahierten Merkmale des Kamerabildes;
Erstellen (310) eines ersten Histogramms, das dem einen oder den mehreren extrahierten Merkmalen des Kamerabildes entspricht;
Clustern (328) des einen oder der mehreren extrahierten Merkmale des zweiten Sensorbildes;
Erstellen (330) eines zweiten Histogramms, das dem einen oder den mehreren extrahierten Merkmalen des zweiten Sensorbildes entspricht;
Abgleichen (332) des ersten Histogramms und des zweiten Histogramms und Verwenden des Ergebnisses des Abgleichs, um die Merkmale des Kamerabildes und des zweiten Sensorbildes abzugleichen;
Abgleichen (334) des einen oder der mehreren extrahierten Merkmale des ersten Sensorbildes und des einen oder der mehreren extrahierten Merkmale des zweiten Sensorbildes; und
Ausrichten (336) einer Abbildung von Objekten in der Umgebung mit einer mathematischen Darstellung der Umgebung basierend auf dem Abgleich der Merkmale des Kamerabildes und des zweiten Sensorbildes und dem Abgleich des einen oder der mehreren extrahierten Merkmale des ersten Sensorbildes und des einen oder der mehreren extrahierten Merkmale des zweiten Sensorbildes.

14. Sensoranordnung (202), die einen ersten Sensor (102, 204), der geeignet ist zum Bereitstellen eines ersten Sensorbildes und eines zweiten Sensorbildes, und eine Kamera (104, 206) umfasst, die geeignet ist zum Bereitstellen eines Kamerabildes, wobei das erste Sensorbild und das zweite Sensorbild und das Kamerabild von einer gleichen Umgebung sind, wobei die Umgebung mindestens einen Typ einer sich wiederholenden Struktur aufweist, wobei der erste Sensor (102, 204) in der Lage ist, einen Abstand zu und die Abmessungen von einem Objekt in dem ersten Sensorbild und dem zweiten Sensorbild zu ermitteln, wobei die Sensoranordnung (202) ferner ein Steuerelement umfasst, das zum Steuern der Sensoranordnung (202) geeignet ist, wobei das Steuerelement eine Steuereinheit (106, 208) nach einem der Ansprüche 9 bis 13 ist.

15. Sensoranordnung (202) nach Anspruch 14, wobei der erste Sensor (102, 204) ein Lidar oder ein RADAR ist.

## Revendications

1. Procédé d'entraînement d'un réseau neuronal convolutif, le procédé comprenant la fourniture d'une première image de capteur et d'une deuxième image de capteur obtenues par un capteur (102, 204), le capteur (102, 204) étant capable de déterminer une distance et des dimensions d'un objet dans la première image de capteur et la deuxième image de capteur, et la fourniture d'une image de caméra obtenue par une caméra (104, 206), la première image de capteur et la deuxième image de capteur et l'image de caméra étant d'un même environnement, l'environnement ayant au moins un type de structure répétitive, le procédé comprenant :
pour une pluralité d'images de capteur fournissant des vues différentes de l'environnement :
la génération (302) d'une première carte par cartographie de l'environnement avec la première image de capteur ;
l'extraction (304) d'une ou plusieurs caractéristiques de la première image de capteur, les caractéristiques étant reliées à un ou plusieurs plans limites de l'environnement ;
la génération (312) d'une deuxième carte par cartographie de l'environnement avec la deuxième image de capteur ;
l'extraction (314) d'une ou de plusieurs caractéristiques de la deuxième image de capteur, l'extraction des une ou plusieurs caractéristiques de deuxième image de capteur comprenant l'utilisation des une ou plusieurs caractéristiques de première image de capteur extraites ;
la projection (316) des une ou plusieurs caractéristiques de deuxième image de capteur sur un plan d'image 2d en utilisant une transformation rigide entre la deuxième image de capteur et l'image de caméra ;
l'étiquetage (318) des une ou plusieurs caractéristiques de deuxième image de capteur projetées sur le plan d'image 2d ; et
l'entraînement (320) du réseau neuronal convolutif avec les une ou plusieurs caractéristiques de deuxième image de capteur projetées sur le plan d'image 2d.

2. Procédé selon la revendication 1, comprenant en outre la détermination d'une échelle pour amener une ou les deux de l'image de capteur et de l'image de caméra à la même échelle.

3. Procédé selon la revendication 1, dans lequel l'étape d'extraction des une ou plusieurs caractéristiques dans l'image de capteur comporte l'identification d'au moins un coin dans la caractéristique, le coin étant l'intersection de deux bords d'intersection de la caractéristique, et la détermination de la hauteur de la caractéristique et des longueurs normalisées des bords d'intersection.

4. Procédé selon l'une quelconque des revendications précédentes, dans lequel le premier capteur (102, 204) est un lidar ou un RADAR.

5. Procédé selon l'une quelconque des revendications 1 à 4, dans lequel l'extraction des une ou plusieurs caractéristiques de deuxième image de capteur comprend l'utilisation du réseau neuronal convolutif.

6. Procédé selon la revendication 5, comprenant la projection (326) des une ou plusieurs caractéristiques extraites associées à la deuxième image de capteur de la 2D à la 3D et la fourniture des données 3D en tant que données d'entraînement pour extraire les une ou plusieurs caractéristiques associées à la deuxième image de capteur.

7. Procédé selon l'une quelconque des revendications 1 à 6, comprenant :
l'extraction (306) d'une ou plusieurs caractéristiques de l'image de caméra, les une ou plusieurs caractéristiques de l'image de caméra étant les mêmes que les une ou plusieurs caractéristiques de la première image de capteur extraites ;
le regroupement (308) des une ou plusieurs caractéristiques de l'image de caméra extraites ;
la construction (310) d'un premier histogramme correspondant aux une ou plusieurs caractéristiques de l'image de caméra extraites ;
le regroupement (328) des une ou plusieurs caractéristiques de la deuxième image de capteur extraites ;
la construction (330) d'un deuxième histogramme correspondant aux une ou plusieurs caractéristiques de la deuxième image de capteur extraites ;
la mise en correspondance (332) du premier histogramme et du deuxième histogramme et l'utilisation du résultat de la mise en correspondance pour mettre en correspondance les caractéristiques de l'image de caméra et de la deuxième image de capteur ;
la mise en correspondance (334) des une ou plusieurs caractéristiques de la première image de capteur extraites et des une ou plusieurs caractéristiques de la deuxième image de capteur extraites ; et
l'alignement (336) d'une carte d'objets dans l'environnement avec une représentation mathématique de l'environnement sur la base de la mise en correspondance des caractéristiques de l'image de caméra et de la deuxième image de capteur et de la mise en correspondance des une ou plusieurs caractéristiques de la première image de capteur extraites et des une ou plusieurs caractéristiques de la deuxième image de capteur extraites.

8. Produit de programme informatique comprenant un moyen de code lisible par ordinateur qui, lorsqu'il est exécuté dans une unité de commande (106, 208) d'un réseau neuronal convolutif, amènera le réseau neuronal convolutif à réaliser le procédé selon l'une quelconque des revendications précédentes.

9. Unité de commande (106, 208) pour un système de traitement d'images en auto-entraînement (108, 306), l'unité de commande (106, 208) étant configurée pour recevoir une première image de capteur et une deuxième image de capteur en provenance d'un premier capteur (102, 204), le premier capteur (102, 204) étant capable de déterminer une distance et des dimensions d'un objet dans une première image de capteur et la deuxième image de capteur, et une image de caméra en provenance d'une caméra (104, 206), la première image de capteur et la deuxième image de capteur et l'image de caméra étant d'un même environnement, l'environnement ayant au moins un type de structure répétitive, l'unité de commande (106, 208) étant agencée pour commander le système de traitement d'image en auto-entraînement afin de réaliser les étapes suivantes :
pour une pluralité d'images de capteur fournissant des vues différentes de l'environnement :
générer (302) une première carte par cartographie de l'environnement avec la première image de capteur ;
extraire (304) une ou plusieurs caractéristiques de la première image de capteur, les caractéristiques étant reliées à un ou plusieurs plans limites de l'environnement ;
générer (312) une deuxième carte par cartographie de l'environnement avec la deuxième image de capteur ;
extraire (314) une ou plusieurs caractéristiques de la deuxième image de capteur, l'extraction des une ou plusieurs caractéristiques de deuxième image de capteur comprenant l'utilisation des une ou plusieurs caractéristiques de première image de capteur extraites ;
projeter (316) les une ou plusieurs caractéristiques de deuxième image de capteur sur un plan d'image 2d en utilisant une transformation rigide entre la deuxième image de capteur et l'image de caméra ;
étiqueter (318) les une ou plusieurs caractéristiques de deuxième image de capteur projetées sur le plan d'image 2d ; et
entraîner (320) le réseau neuronal convolutif avec les une ou plusieurs caractéristiques de deuxième image de capteur projetées sur le plan d'image 2d.

10. Unité de commande selon la revendication 9, dans laquelle l'étape d'extraction des une ou plusieurs caractéristiques dans l'image de capteur comporte l'identification d'au moins un coin dans la caractéristique, le coin étant l'intersection de deux bords d'intersection de la caractéristique, et la détermination de la hauteur de la caractéristique et des longueurs normalisées des bords d'intersection.

11. Unité de commande selon l'une quelconque des revendications 9 et 10, dans laquelle l'extraction des une ou plusieurs caractéristiques de deuxième image de capteur comprend l'utilisation du réseau neuronal convolutif.

12. Unité de commande selon la revendication 11, l'unité de commande étant configurée pour réaliser les étapes de : projection (326) des une ou plusieurs caractéristiques extraites associées à la deuxième image de capteur de la 2D à la 3D et fourniture des données 3D en tant que données d'entraînement pour extraire les une ou plusieurs caractéristiques associées à la deuxième image de capteur.

13. Unité de commande selon l'une quelconque des revendications 9 à 12, l'unité de commande étant configurée pour réaliser les étapes de :
extraction (306) d'une ou plusieurs caractéristiques de l'image de caméra, les une ou plusieurs caractéristiques de l'image de caméra étant les mêmes que les une ou plusieurs caractéristiques de la première image de capteur extraites ;
regroupement (308) des une ou plusieurs caractéristiques de l'image de caméra extraites ;
construction (310) d'un premier histogramme correspondant aux une ou plusieurs caractéristiques de l'image de caméra extraites ;
regroupement (328) des une ou plusieurs caractéristiques de la deuxième image de capteur extraites ;
construction (330) d'un deuxième histogramme correspondant aux une ou plusieurs caractéristiques de la deuxième image capteur extraites ;
mise en correspondance (332) du premier histogramme et du deuxième histogramme et utilisation du résultat de la mise en correspondance pour mettre en correspondance les caractéristiques de l'image de caméra et de la deuxième image de capteur ;
mise en correspondance (334) des une ou plusieurs caractéristiques de la première image de capteur extraites et des une ou plusieurs caractéristiques de la deuxième image de capteur extraites ; et
alignement (336) d'une carte d'objets dans l'environnement avec une représentation mathématique de l'environnement sur la base de la mise en correspondance des caractéristiques de l'image de caméra et de la deuxième image de capteur et de la mise correspondance des une ou plusieurs caractéristiques de la première image de capteur extraites et des une ou plusieurs caractéristiques de la deuxième image de capteur extraites.

14. Ensemble capteur (202) comprenant un premier capteur (102, 204) agencé pour fournir une première image de capteur et une deuxième image de capteur et une caméra (104, 206) agencée pour produire une image de caméra, la première image de capteur et la deuxième image de capteur et l'image de caméra étant d'un même environnement, l'environnement présentant au moins un type de structure répétitive, le premier capteur (102, 204) étant capable de déterminer une distance et des dimensions d'un objet dans la première image de capteur et la deuxième image de capteur, l'ensemble capteur (202) comprenant en outre un moyen de commande agencé pour commander l'ensemble capteur (202), le moyen de commande étant une unité de commande (106, 208) selon l'une quelconque des revendications 9 à 13.

15. Ensemble capteur (202) selon la revendication 14, dans lequel le premier capteur (102, 204) est un lidar ou un RADAR.
